# EUROPEAN PATENT APPLICATION

(11) **EP 1 662 832 A1**
(43) Date of publication of application: **31.05.2006**
(21) Application number: 04292831.7
(22) Date of filing: 30.11.2004
(51) Int. Cl.: H04Q 7/38, H04Q 7/22

(54) **Preservation of the continuity of service in a telecommunications network**

(71) Applicant: Axalto SA, 92120 Montrouge (FR)
(72) Inventor: Joly, Isabelle, c/o Axalto S.A., 92120 Montrouge (FR); Muller, Marc, c/o Axalto S.A., 92120 Montrouge (FR)
(74) Representative: Jacquot, Ludovic R. G.

(57) **Abstract**

The invention relates to a method for limiting a risk of a user-level break of continuity of service in a mobile telecommunications network, said mobile telecommunications network comprising a fleet of mobile telecommunication units each comprising an original authenticating token such as a smart card said mobile telecommunications network also comprising a remote telecommunications system which communicates with said fleet of mobile units and which includes a plurality of user accounts respectively associated with each mobile unit of said fleet, each said authenticating token storing at least a permanent parameter associated with a respective user account in the remote telecommunications system, said method being characterised in that each mobile telecommunications unit is equipped over the expected period of life of the original authenticating token with an additional authenticating token said additional authenticating token storing a network-expected parameter for logging the additional token onto the netwok when inserted in a mobile unit said additional authenticating token also storing an application which sends, upon successful logon of the mobile unit in the network, a message comprising data which identify the user account and/or the original authenticating token for enabling replacement of the parameter of the original authenticating token by the parameter of the additional authenticating token in said user account in the remote telecommunications system.

## Description

### The Field of the Invention

The invention deals with preservation of the continuity of service in a telecommunications network.

In particular the invention relates to continuity of service when using mobile telecommunication handsets such as mobile phones and specifically when such handsets are equipped with a retrievable security token, typically used for authentication on the network.

Such a token typically includes processing and memory means. The best known of these tokens is the smart card or Sim card, but such tokens can also be realized under another shape.

The invention relates more specifically to the preservation of the continuity of service when an end-user is deprived of is security token in case of loss or theft of said token, typically due to theft or loss of the associated handset.

The invention applies typically but not exclusively to SIM Card replacement in the GSM (Global System for Mobile Communication) world where SIM plays an important role in identifying subscribers to the GSM network operator for services such as voice communications, mobile services, and mobile transactions.

In our illustrated example, the account will be identified typically with a parameter called IMSI (International Mobile Subscriber Identity), as is known in the art. Nevertheless, the invention is not limited to this example, and any other parameters identifying a subscriber account is part of the invention.

### Prior Art

The current process to recover GSM subscription and personal data in case of mobile theft or loss is complex. At theft or loss, the subscriber must call the operator customer service to deactivate the stolen/lost SIM card (to prevent unauthorized calls) and get the IMEI number of the stolen/lost mobile device to declare the theft/loss to the police.

After the theft/loss declaration, the subscriber receives a recovery SIM card and must call the customer service again for activation

On subscriber side, at least two numbers must be known: the customer service number that is generally a specific phone number for theft/loss declaration, and the IMEI number of the stolen/lost mobile device. Most of the time, the subscribers do not know these two numbers.

Moreover, the subscription cannot be recovered until reception of the recovery SIM card : the SIM card is sent at home a few days after the declaration or can be retrieved at Point of Sales (if any). Continuity of service can not be fully ensured by the operator.

On mobile operators side, the roamers calls are lost. The associated customer care costs are significant.

The process and efficiency of SIM replacement become a hassle when large amounts of SIM cards need be replaced, causing subscribers undue inconvenience in most cases.

In addition, the processes involved may have been automated as a standard operation at the POS level, but they are still not applicable to most operators when performing a remote (outside POS) card replacement. For a prepaid subscriber's SIM replacement, it is even impossible to most operators when the existing account information is unknown to the network operators.

The aim of the invention is to provide a solution for better ensuring the continuity of service at the end-user level in case of a theft or a loss of a handset and therefore of the associated authenticating token.

The invention aims at providing a solution which is efficient, easy to implement and low cost.

### Summary

The solution is a method for limiting a risk of a user-level break of continuity of service in a mobile telecommunications network according to the object recited in claim 1.

Another aspect of the invention is an application of a telecommunication gear to limiting a risk of a user-level break of continuity of service in a mobile telecommunications network which application is recited by claim 2.

Still another aspect of the invention is a piece of mobile telecommunications network comprising means for limiting a risk of a user-level break of continuity of service said telecommunications device being recited in claim 3.

### Brief Description of the attached Drawings

Figure 1 is a view of a telecommunications system in which the invention can be applied.
Figure 2 is a file structure of a recovery SIM card according to the invention in a particular embodiment which allows a remote replacement of the previous SIM card.

### Detailed Description

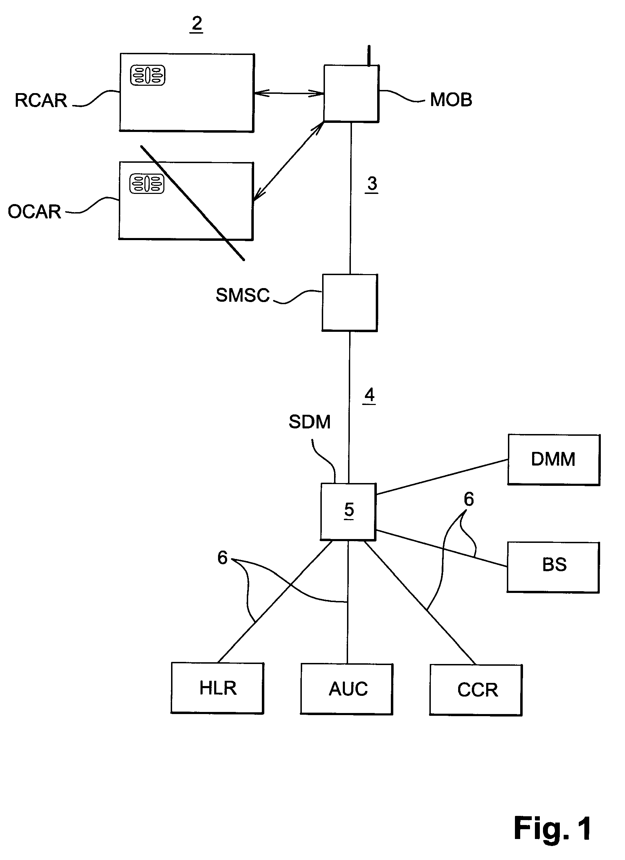

Figure 1 is a view of a telecommunications system that includes:
- an original SIM card OCAR;
- a recovery SIM card RCAR;
- a mobile phone MOB where a SIM card can be inserted into;
- the mobile phone communicates with a SMS center SMSC; and
- the SMS center SMSC communicates with a SIM data management SDM communicating with a plurality of entities able to manage the account attached to each SIM card. Management of a SIM card includes network authentication, mobile localization, and the like.

For each SIM card, there are two basic elements on the card in order for the network to identify the subscribers: (1) an IMSI (International Mobile Subscriber Identity) and, (2) a Ki (Authentication key). The IMSI serves as the account identifier, whereas the Ki is used when the subscriber's mobile station (handset/phone) is requesting to logon to the network. There is an ICCID (IC Card Identifier) on the card in order for the operator to act as the SIM card ID as it serves as the serial number of the card in most cases.

The network authenticates the SIM card (identified by the IMSI value) based on the authentication result generated by the Ki and the on-card authentication algorithm, for example, the Comp128 algorithm defined in the GSM specification.

In order for the subscriber to logon to the network, the IMSI and Ki value are preferably preloaded onto the network's AuC.

Otherwise it would be necessary to perform a transfer of these values, typically from the mobile handset to the network's AuC, with a risk for interception during transfer from the mobile to the AuC and a consequent risk of fraud. Indeed if the IMSI and Ki is not present in the AuC, the subscriber cannot logon to the network due to in-exists IMSI entry.

The recovery SIM includes :
- One-time parameter(s) (IMSI/Ki) known from the network (HLR,AuC), said one-time parameter being provided for actuation of a temporary active account, and
- Recovery parameters identifying a recovery IMSI/Ki attached to said card and aimed at being correlated to the same account as the previous card.
The reason one-time parameter(s) (IMSI/Ki) is/are used rather than the straightly the recovery parameters IMSI/Ki is to ease the number of activated subscriptions.

The RECOVERY SIM Card RCAR more specifically contains the following information:
1. A recovery IMSI, KI in a hidden file ready to be activated. In a preferred aspect the IMSI and Ki pair of the card being replaced will be removed from the AuC, and thereafter replaced by the recovery IMSI, Ki value of the replacement (recovery) card, which are typically preloaded in the AuC.
2. A One-time IMSI, One-time KI in order for the recovery card to get the access to the network to perform one-time activation request;
3. A small hidden application with the ability to send out an Activation Request to a dedicated address for account activation by SMS, USSD String, or any other means to inform the backend for such request when the user initiate an Activation Request in the form of menu selection on the phone, or auto-trigger after the One-time account activation.

After the RECOVERY card RCAR has sent out the Activation Request, another component at the network side, namely "the SIM Data Management System" SDM, processes the Activation Request.

The SIM Data Management System SDM mainly serves the following purposes:
1. Receive Activation Request from the subscribers;
2. Deactivate the IMSI and/or Ki of the original Card based on the information received from the subscriber. Deactivation will be done on the AuC, HLR, or any other systems required; and
3. Activation of the Recovery IMSI and/or Ki based on the information received from the subscriber and provide it/them to the AuC, HLR, or any other systems required.

The purpose of the recovery card before activation is to send the activation request. This is why every recovery card uses the same number as long as the information sent out inside the activation request contains information for identification of the previous card and therefore identification of the considered account to link to the replacement card.

This information identifying the previous card is for example the ORIGINAL card's IMSI and RECOVERY card (SCB) embedded IMSI for reference.

In other embodiments, any other information may be sent by the RECOVERY card through the activation request, this sent information being also precorrelated to said account of the user inside the operator's device.

The SIM Data Management Server SDM determines in which HLR/AuC the recovery IMSI/Ki resides at the time of activation. Consequently, this allows better management of HLR subscription capacity and the one-time IMSI/Ki is shared with multiple cards.

The activation steps are the followings:
1) When a handset carrying the recovery SIM card is switched on, the one-time IMSI/Ki is used to login to the network;
2) Upon successful login to the network, a program stored in the recovery SIM automatically sends an activation request for activating said recovery account.

The following describes in more detail a preferred embodiment in which the card and the operator's AuC and SDM comprise means for ensuring other roles, such as identification of the robbed/lost handset, and also preservation of the personalization of the card such as phonebook entries.

There are three independent parts in the present preferred embodiment solution: the Recovery SIM availability, the remote SIM activation and the stolen device management.

### Recovery SIM availability

The basic idea is to provide the subscriber with two SIM cards:
A first SIM card called "mother SIM Card" provided at the GSM subscription and containing the following information:
   a. Subscriber account information
   b. A first application called "IMEI tracking" application with the ability to read the IMEI number of the mobile device each time the subscriber switch on and the ability to send out this number to a dedicated address by SMS, USSD string or any other means to inform the backend each time this number is different than previously.
   c. A second application called "Phonebook backup/restore" application .
   d. A third application called "Access code update" application with the ability to let the subscriber update an access code which is required to access the recovery service said application being also able to send the updated access code to a dedicated address by SMS, USSD string or any other means to inform the backend of such update.
The second SIM card called hereafter "recovery Card" is provided at the recovery service subscription in view of being physically preserved for the whole expected life of the original card.
   Said recovery card can also be provided when a user expresses the concern to have such a recovery card at hand, for example at a dedicated
   Point of Sale. In this alternate situation, it will be understood that the recovery card is also to be kept at the location of the user for the expected remaining life of the still at hand original card.
   Such recovery card is therefore provided in circumstances that are less energy and time consuming than in the circumstances of a theft or a loss.
   The "recovery" card contains the following information:
   e. The same mother card applications "IMEI tracking", "Phonebook backup/restore" and "Access code update" applications
   f. The ICCID of the mother SIM in a hidden file
   g. The one-time IMSI, KI in order for the recovery card to get the access to the network to perform one-time activation request
   h. An application providing the ability to make at least one phone call to predefined phone numbers only before activation with the one time account. Usually, the predefined numbers will be the customer care center number in case for any query.
   i. A small hidden application with the ability to send out an Activation Request to a dedicated address for account activation by SMS, USSD String, or any other means to inform the backend for such request when the user initiate an Activation Request in the form of menu selection on the phone (a recovery access code is mandatory to proceed)

This activation application sends information (with encryption and checksum) that includes, for example:
- The Old ICCID and the Old IMSI in a temporary file that is to be disabled; and
- The Recovery ICCID and the Recovery IMSI from the hidden file that is to be enabled.

For security reasons, old/recovery KI are not sent out by the applet. The sole IMSI, ICCID are sent.

The basic idea is that the subscriber keeps the recovery SIM card with him/her and uses it in case of theft/loss by inserting it in any compatible device to automatically:
- Deactivate the stolen/lost mother SIM and activate the recovery
   SIM with the same MSISDN.
- Receive the IMEI number of the stolen/lost device by SMS thanks to the fact that the remote operator's device had been informed of the IMEI number of the lastly used handset and is therefore able to send it back to the recovery handset carrying the recovery SIM card.
- Recover the phonebook previously stored on the stolen/lost SIM

The recovery SIM becomes the recovery mother SIM card and a recovery recovery SIM may be provided by the operator or directly by the card manufacturer.

The recovery card could be personalized to provide other services before SIM replacement phase, such as loyalty for instance, using contactless functions or other additional functions.

### Remote SIM Activation

The SIM Data Management system will centrally store the mother SIM cards information and associated recovery SIM cards information (ICCD, IMSI, KI, MSISDN ...). Thanks to these data and after the recovery SIM sent out the Activation Request, the SIM Data Management system will process the Activation Request.

### Stolen device management

Anytime, anywhere, another component on the network side named Device Management Module - DMM will track the device change and store the associated IMEI in a centralized database. The device management module mainly serves the following purpose:
- Store IMEI number and associated MSISDN received from IMEI tracking application
- Send the IMEI number of the stolen/lost device to the associated MSISDN
- Provide reports and statistics related to the operator's device installed base.

The following steps are therefore carried out.

The different steps involved are represented in Figure 1. Arrows referenced with a respective number (2 to 6) indicate the direction of each message. The different steps are:
1. The original SIM card is lost or robbed.
2. Recovery SIM card RCAR is inserted into the phone MOB, logon to the network using the One-time a/c. It then sends out the recovery card information in step 3. Upon successful sending, Recovery IMSI and KI are overwritten to replace the existing One-time account waiting for activation.
3. The card RCAR sends out the Activation Request to the backend using this One-Time a/c.
4. A dedicated SMSC receives the Activation Request, and passes the request to SIM Data Management SDM.
5. SIM Data Management system SDM processes the request, fetches for the corresponding account information, and performs backend replacement/activation process of the account activating parameters.
6. SIM Data Management system SDM updates various systems, including AuC for Card Activation.

### Subscription of the recovery service

At recovery service subscription, the subscriber receives a recovery SIM card from the operator, from the operator's distribution channel or directly from the card manufacturer.

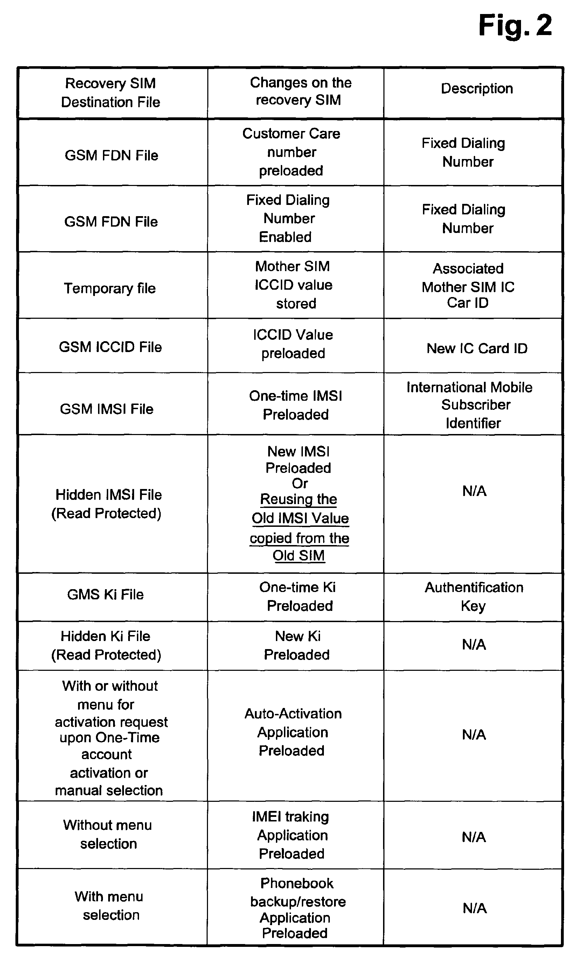

The recovery SIM card will have the file structure illustrated at figure 2 to facilitate the remote replacement and activation.

The One-Time IMSI and Ki is attached to an existing account on the network for all the recovery cards to logon to the network for Activation Request. This account shall not be able to make any phone calls thanks to the network setup and thanks also to the card FDN file (Fixed Dialing Number File ). The user is enabled by this collective account for Customer Care center only.

### At theft or loss of mobile device

The subscriber will insert the recovery SIM card in any compatible mobile device to start the Activation Request. Upon insertion of the recovery SIM card, the SIM card and the Auto-Activation application will perform the following:
- The recovery SIM Card will Authenticate with the network using the One-time IMSI and the response calculated from the One-time Authentication Key, Ki
- Upon successful logon to the network, the Auto-Activation application will send out an Activation Request to the SIM Data Management Server and device management module connected to the SMSC.
   ○ The SIM Data Management server will proceed to the activation/deactivation.
   ○ The device management module will flag the last IMEI number of the subscriber as the stolen/lost one.
- Upon successful sending of the Activation-Request-SMS, the Auto-Activation application will :
   ○ Exchange the One-Time IMSI and One-Time Ki with the Recovery
      IMSIand the recovery Ki in the hidden file of the card.
   ○ It then enables the ADN and disables the FDN.
- The Auto-activation application will also prompt the user to "Activation in Progress" and ask the user to Switch off and on the phone in 5 minutes. The recovery SIM will wait for the SIM Data Management System to activate the account.
- After switch on again:
   o The recovery SIM card is activated with the same MSISDN than before theft/loss and it becomes the recovery mother card of the subscriber
   o The IMEI number of the stolen/lost mobile device is sent by the device management module and received by sms.

Anytime, the subscriber can ask for phonebook restore using an associated menu.

On the SIM Data Management SDM Side, the actions are as follows:
The SIM Data Management SDM receives the Activation Request, decrypts the information and checks against the checksum for validity. It then looks up from the other network repository the account information in order to deactivate the account when activated with the old IMSI/Ki.

Advantageously, upon successful deactivation of Old IMSI/Ki and activation of the Recovery IMSI/Ki, the SIM Data Management System SDM can send, for example, an optional SMS to confirm the activation of the recovery SIM card (IMSI/Ki). If the SMS is successfully delivered to the handset within a predefined period, the system can record that a successful activation has been carried out.
If any failure has occurred during the previous steps, a proper exception handling process is carried out which sends an alarm to the Customer Care to investigate and take corrective measures on the recovery procedure at the backend.

## Claims

**1.** A method for limiting a risk of a user-level break of continuity of service in a mobile telecommunications network, said mobile telecommunications network comprising a fleet of mobile telecommunication units each comprising an original authenticating token such as a smart card said mobile telecommunications network also comprising a remote telecommunications system which communicates with said fleet of mobile units and which includes a plurality of user accounts respectively associated with each mobile unit of said fleet, each said authenticating token storing at least a permanent parameter associated with a respective user account in the remote telecommunications system, said method being **characterised in that** each mobile telecommunications unit is equipped over the expected period of life of the original authenticating token with an additional authenticating token said additional authenticating token storing a network-expected parameter for logging the additional token onto the network when inserted in a mobile unit said additional authenticating token also storing an application which sends, upon successful logon of the mobile unit in the network, a message comprising data which identify the user account and/or the original authenticating token for enabling replacement of the parameter of the original authenticating token by the parameter of the additional authenticating token in said user account in the remote telecommunications system.

**2.** Application of a telecommunications gear to limiting a risk of a user-level break of continuity of service in a mobile telecommunications network said telecommunications gear comprising a mobile telecommunications unit, an original authenticating token associated with a user account in an operator remote telecommunications system, and an additional authenticating token which is kept as a preserved part of said gear over the expected period of life of the original authenticating token said additional authenticating token storing a network-expected parameter for logging the additional token onto the network when inserted in a mobile unit said additional authenticating token also storing an application which sends, upon successful logon of the additional unit in the network, a message comprising data which identify the user account and/or the original authenticating token for enabling replacement of the parameter of the original authenticating token by the parameter of the additional authenticating token in said user account in the remote telecommunications system.

**3.** A piece of mobile telecommunications network comprising means for limiting a risk of a user-level break of continuity of service, said piece of mobile telecommunications network comprising a fleet of mobile telecommunications units each comprising an original authenticating token such as a smart card said piece of mobile telecommunications network also comprising a remote telecommunications system which communicates with said fleet of mobile units, each said original authenticating token storing at least a parameter associated with a respective user account in the remote telecommunications system, said system being **characterised in that** each mobile telecommunications unit is associated over the expected period of life of the original authenticating token with an additional authenticating token said additional authenticating token storing a network-expected parameter for logging the additional token onto the network when inserted in a mobile unit said additional authenticating token storing an application which sends, upon successful logon of the additional token to the network, a message comprising data which identify the user account and/or the original authenticating token for enabling replacement of the parameter of the original authenticating token by the parameter of the additional authenticating token in said user account in the remote telecommunications system.

**4.** A piece of telecommunications network according to claim 3, **characterized in that** the network-expected logging parameter is a one-time parameter identifying an active account designed for a one-time use for each given mobile telecommunications unit.

**5.** A piece of telecommunications network according to claim 4, wherein said one-time parameter is the same for a set of said additional authenticating tokens.

**6.** A piece of telecommunications network according to claim 3, **characterized in that** said data which identify the user account and/or the original authenticating token comprise at least one permanent parameter which is initially deactivated as to the user account and becomes activated by sending the said message.

**7.** A piece of telecommunications network according to claim 4, **characterized in that** the current active account is deactivated once the activation message is sent.

**8.** A piece of telecommunications network according to the preceding claim, **characterized in that** the original token includes an application with the ability to read an identifying number of the mobile device which carries said original card and the ability to send out this number to a remote device to inform said remote device each time this number is different than previously.

**9.** A piece of telecommunications network according to claim 3, **characterized in that** it includes an remote device which receives and memorizes the last sent out identifying number of the handset, said remote device being programmed to send said identifying number back to the recovery token in response to activation of said recovery token.

**10.** A piece of telecommunications network according to claim 3, **characterized in that** the original token includes an application with the ability to offer the subscriber the possibility to update an access code which is required prior to sending said identifying message said application being also able to send the updated access code to inform a remote server of such update.

**10.** A piece of telecommunications network according to claim 3, **characterized in that** the additional token includes an application providing the ability to make at least one phone call to restrictively predefined phone numbers before sending of said identifying message.

**11.** A piece of telecommunications network according to claim 3, **characterized in that** the original token includes an application which sends phonebook entries to a remote memorizing device of the operator, and the additional token includes an application for receiving said phonebook entries from the remote memorizing device and storing said entries.

**12.** A piece of telecommunications network according to claim 3, **characterized in that** upon successful activation of the additional authenticating token with the user's account a remote operator's device is able to send a message to the additional SIM card for confirming the activation of the additional authenticating token .

**13.** A piece of telecommunications network according to claim 3, **characterized in that** means are provided for sending an alarm to a Customer Care server and initiating corrective measures in case the additional token is not successfully activated.

**14.** A piece of telecommunications network according to claim 3, wherein sending said identifying message is initiated by means of an auto-activation application executed after receiving a message from the network informing a successful logon.
